# EUROPÄISCHE PATENTSCHRIFT

(11) **EP 1 250 666 B1**
(45) Veröffentlichungstag und Bekanntmachung des Hinweises auf die Patenterteilung: **21.06.2006**
(21) Anmeldenummer: 00903654.2
(22) Anmeldetag: 29.01.2000
(51) Int. Cl.: G06Q 10/00, G05B 19/418

(54) **VERFAHREN ZUM AUTOMATISIERTEN ERMITTELN VON FEHLEREREIGNISSEN**
METHOD FOR THE AUTOMATED DETECTION OF FAILURE EVENTS
PROCEDE POUR DETERMINER, DE MANIERE AUTOMATISEE, DES EVENEMENTS D'ERREURS

(43) Veröffentlichungstag der Anmeldung: 23.10.2002
(73) Patentinhaber: ABB RESEARCH LTD., 8050 Zürich (CH)
(72) Erfinder: KALLELA, Jari, B-1310 La Hulpe (BE); VOLLMAR, Gerhard, D-67149 Meckenheim (DE); SZÖKE, Szanislo, B-5340 Gesues (BE)
(74) Vertreter: Miller, Toivo
(86) Internationale Anmeldenummer: PCT/EP2000/000715
(87) Internationale Veröffentlichungsnummer: WO 2001/055919

(56) Entgegenhaltungen:
- US-A- 5 574 640
- US-A- 5 737 581
- NAJJARI H ET AL: "INTEGRATED SENSOR-BASED CONTROL SYSTEM FOR A FLEXIBLE ASSEMBLY CELL" MECHATRONICS, Bd. 7, Nr. 3, 1997, Seiten 231-262, XP004064842

## Beschreibung

Die Erfindung bezieht sich auf ein Verfahren zum automatisierten Ermitteln von Fehlerereignissen durch Auswertung von Felddaten einer Produktionsanlage im Rahmen eines Systems zur Ermittlung der Effektivität (Overall Equipment Effectiveness OEE) der Produktionsanlage und zur Fehlerursachenanalyse.

Unter Effektivität wird hier der Begriff "Overall Equipment Effectiveness, OEE" verstanden, der beispielsweise beschrieben ist in Robert Hansen: Learning the Power of Overall Equipment Effectiviness, im Konferenzbericht 1999 Machinery Reliability Conference and Exposition, "The Meeting of Machinery Reliability Minds", April 12-14, Cincinnati, Ohio, Seiten 19 bis 30, herausgegeben von Industrial Communications, Inc., 1704 Natalie Nehs Dr., Knoxville, TN 37931.

OEE ist demnach eine Methode zur Ermittlung einer Prozentzahl die angibt, inwieweit die jeweils tatsächliche Produktivität an eine geplante, also vorgegebene Produktivität heranreicht. OEE wird auch als Multiplikation synergetischer Parameter bezeichnet, die die "Gesundheit" eines Prozesses definieren, nämlich OEE = Verfügbarkeit x Verarbeitungsgeschwindigkeit x Qualität.

Betreiber von Produktionsanlagen sind aus wirtschaftlichen Gründen, sowie zur Sicherung der Produktqualität daran interessiert, eine im ungestörten Betrieb erreichbare Soll-Effektivität zu ermitteln und die jeweils aktuelle Effektivität damit zu vergleichen. Weicht die aktuelle Effektivität vom Sollwert ab, so bedeutet dies Produktivitätsverluste. Es ist dann zu ermitteln, welche Fehlerereignisse vorliegen und was dafür ursächlich ist. Ursachen können ihre Wurzeln im physikalischen, menschlichen oder organisatorischen Bereich haben.

Für die Analyse von Fehlern, also von Ereignissen, die das jeweilige Produktionsziel negativ beeinflussen, können unterschiedliche Methoden und Techniken eingesetzt werden. Die wichtigsten Vertreter sind FMEA (Failure Modes and Effects Analysis), Fehlerbaumanalyse, oder statistische Auswerteverfahren, wie beispielsweise die Pareto-Analyse [John Moubray, RCM2, Butterworth-Heinemann, Second Edition 1997].

In einem automatisierten Produktionsbetrieb werden üblicherweise analoge und digitale Felddaten in Historiendatenbanken über längere Zeiträume hinweg gespeichert, so daß grundsätzlich für eine Auswertung zwecks Ermittlung von Fehlerereignissen benötigte Daten zur Verfügung stehen. Fehlerereignisse können als eine Berechnungsgröße aufgefaßt werden, in die die Felddaten nach einer Berechnungsvorschrift überführt werden.

Ein Problem besteht allerdings darin, daß die typischen Möglichkeiten, die ein Leitsystem oder eine Datenbank zur Konfiguration von Fehlermöglichkeiten bereitstellt, sehr beschränkt sind. Es ist auch keine einheitliche Konfiguration von Berechnungsgrößen bekannt. Für eine rasch und einfach durchführbare Analyse reicht es nicht aus, lediglich Alarme oder arithmetisch berechnete Werte zu betrachten. Ein aussagefähiges Fehlerereignis bedarf der Verknüpfung mehrerer Signale unter Beachtung bestimmter Regeln und Randbedingungen. Die Konfiguration solch komplexer Zusammenhänge ist mit den Möglichkeiten eines Leitsystems sehr aufwendig oder überhaupt nicht möglich.

Ein weiteres Problem besteht darin, daß ein ständiges Ausführen komplexer Berechnungsfunktionen, die entsprechend viel Rechenzeit beanspruchen, sowie auch eine Speicherung komplexer Datenstrukturen in typischen Leitsystemen, die im Echtzeitbetrieb arbeiten, unerwünscht sind.

Der Erfindung liegt daher die Aufgabe zugrunde, ein Verfahren anzugeben, das es ermöglicht, automatisiert und mit vergleichsweise geringem Rechenaufwand Fehlerereignisse aus Felddaten abzuleiten.

Diese Aufgabe wird durch ein Verfahren zum automatisierten Ermitteln von Fehlerereignissen gelöst, das die im Anspruch 1 angegebenen Merkmale aufweist. Vorteilhafte Ausgestaltungen sind in weiteren Ansprüchen angegeben.

Bei diesem Verfahren wird demnach programmgesteuert auf ein Produktionsanlagenspezifisches Produktivitäts-Modell zugegriffen und unter Berücksichtigung vorgegebener Konfigurationsdaten ein einfach abarbeitbares OEE-Skript generiert. Dabei wird vorzugsweise auf eines von mehreren, in einem Server eines Netzwerks, insbesondere dem INTERNET bereitgestellter Produktivitäts-Modelle zugegriffen. Gemäß den Anweisungen des OEE-Skripts werden ebenfalls programmgesteuert auf der Basis abgerufener Felddaten sowie zusätzlicher Fehlerereignis-bezogener Daten Fehlerereignisse ermittelt und in einer Fehlerdatenbank zur weiteren Verwendung zur Verfügung gestellt.

Ein wesentlicher Vorteil des Verfahrens besteht darin, daß durch seine Anwendung im Rahmen eines Systems zur Ermittlung der Effektivität (Overall Equipment Effectiveness OEE) einer Produktionsanlage und zur Fehlerursachenanalyse ein lern- und anpassungsfähiges System geschaffen wird, das einen vergleichsweise geringen Rechenaufwand erfordert.

Eine weitere Beschreibung der Erfindung erfolgt nachstehend anhand eines in Zeichnungsfiguren dargestellten Ausführungsbeispiels.

Es zeigen:
- Fig. 1: ein Blockschema eines Systems zur Durchführung des Verfahrens,
- Fig. 2: Schritte des Verfahrensablaufs,
- Fig. 3: Darstellung eines Produktivitätsmodells,
- Fig. 4: ein Verifikations-Skript, und
- Fig. 5: einen Fehlerbaum.

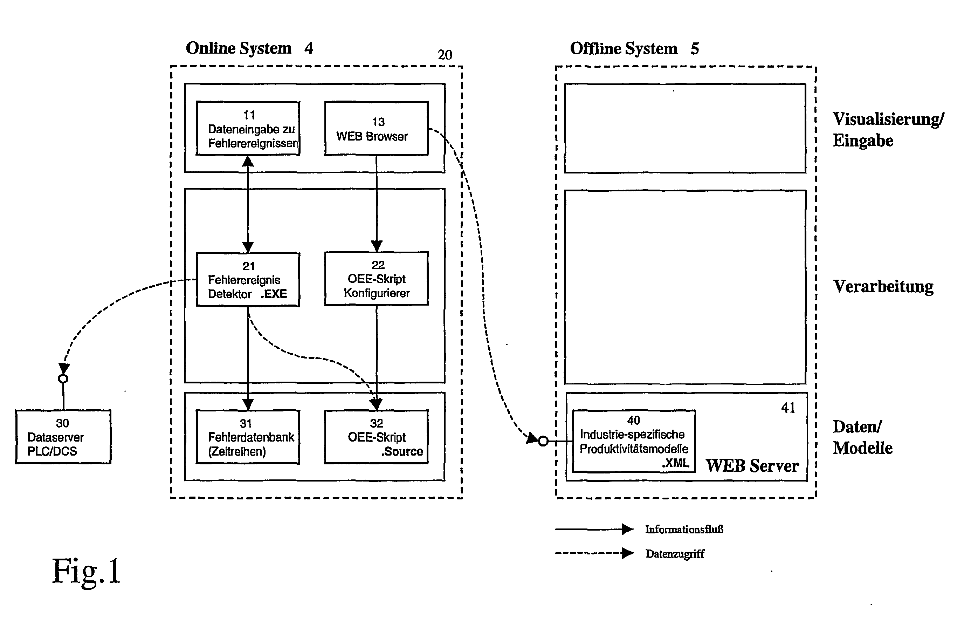

Das Blockschema gemäß Fig. 1 zeigt einen Online-Systemteil 4 und einen Offline-Systemteil 5 eines Service-Systems. Der Online-Systemteil 4 wird durch eine Datenverarbeitungseinrichtung 20 gebildet, die zur Durchführung der Funktionen Fehlerereignis-Detektor 21 und OEE-Skript-Konfigurierer 22 eingerichtet ist. Als Datenspeicher sind eine Fehlerdatenbank 31 und ein OEE-Skript-Speicher 32 vorhanden. Über eine Dateneingabe 11 sind Fehlerereignis-Daten eingebbar. Mittels eines WEB Browsers 13 ist ein Produktionsanlagentyp-spezifisches Produktivitätsmodell 40 aus einem WEB Server 41 abrufbar. Der WEB Server 41 ist Teil des Offline-Systemteils 5.

Der OEE-Skript-Konfigurierer 22 ist dafür eingerichtet, auf der Grundlage des Produktivitätsmodells 40 und Konfigurationsdaten ein OEE-Skript zu erzeugen und im OEE-Skript-Speicher 32 abzulegen.

Der Fehlerereignis-Detektor 21 ist dafür eingerichtet, gemäß Anforderungen des OEE-Skripts auf Felddaten eines Datenservers 30 des Leitsystems einer Produktionsanlage zuzugreifen, daraus Fehlerereignisse abzuleiten und in der Fehlerdatenbank 31 abzulegen.

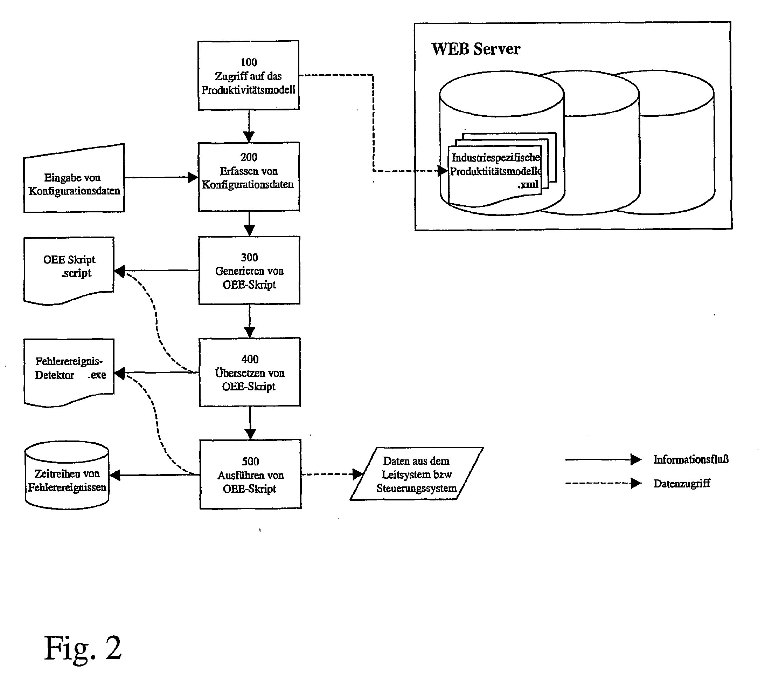

Fig. 2 zeigt die einzelnen Schritte des Verfahrens zum automatisierten Ermitteln von Fehlerereignissen.

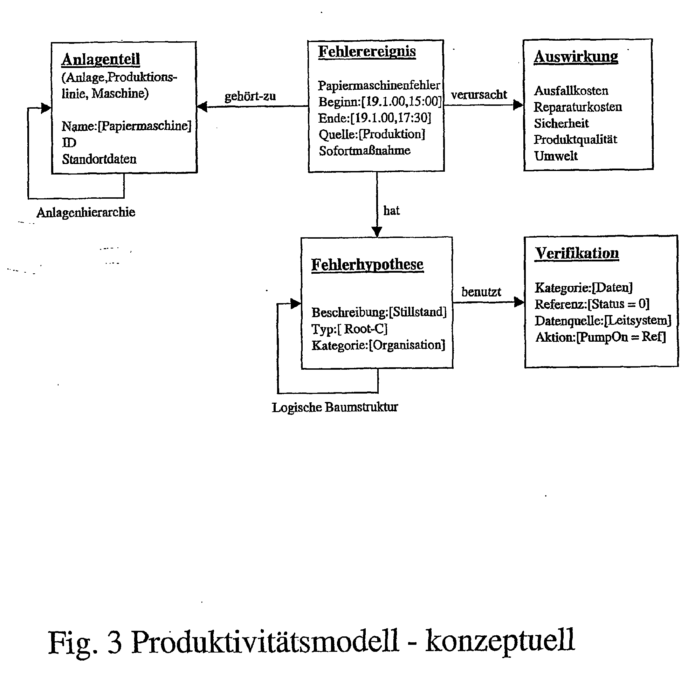

In Schritt 100 wird auf das Produktionsanlagentyp-spezifische Produktivitätsmodell zugegriffen. Das Produktivitätsmodell liegt auf einem WEB Server in XML-Format. Dies ermöglicht einen Zugriff mit einem WEB Browser übers INTERNET. Fig. 3 zeigt in konzeptueller Darstellung ein spezielles Produktivitätsmodell. Schritt 100 entnimmt diesem Modell die notwendige Information zum Erstellen des OEE-Skriptes.

In Schritt 200 werden über den WEB Browser Konfigurationsdaten erfaßt. Beispielsweise müssen die Verifikationskriterien des Modells mit den Adressen von Signalen aus dem Leitsystem verknüpft werden. In dem in Fig. 3 gezeigten Beispiel beinhaltet das Objekt 'Verifikation' im Merkmal 'Aktion' die Bedingung [PumpOn = 0]. Demnach muß 'PumpOn' einer Signaladresse zugeordnet werden.

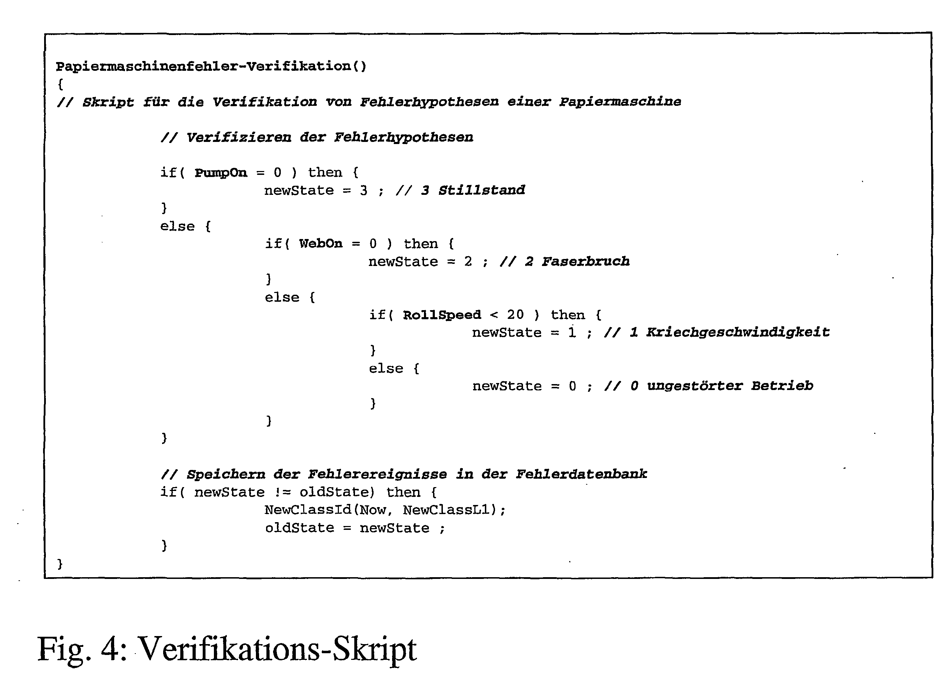

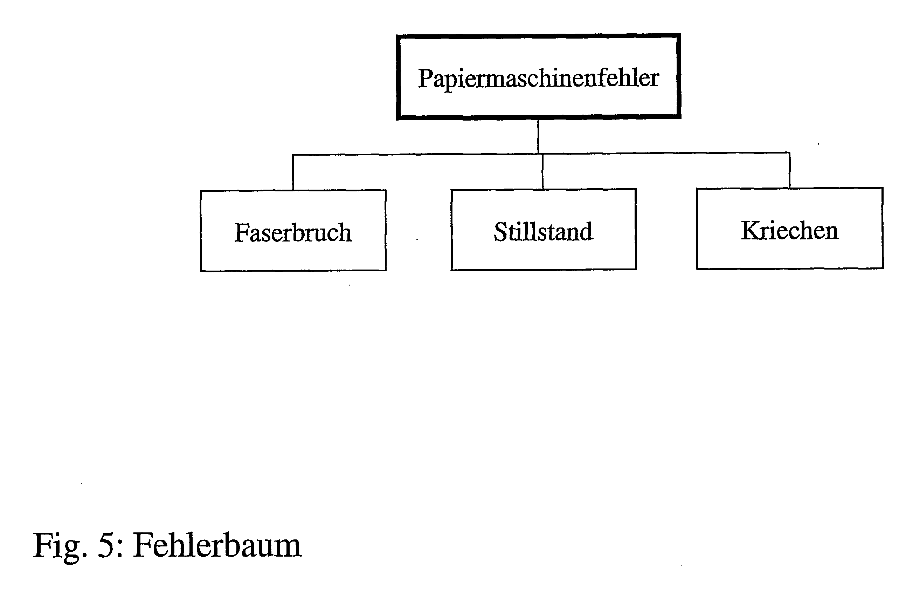

In Schritt 300 wird mit den Konfigurationsdaten und den Informationen aus dem Modell ein OEE-Skript zum Verifizieren von Fehlerhypothesen erzeugt. Fig. 5 zeigt dazu den speziellen Fehlerbaum, der die Objekte 'Fehlerereignis' und 'Fehlerhypothese' des speziellen Produktivitätsmodells aus Fig. 3 repräsentiert. Das in Fig. 4 als Verifikations-Skript bezeichnete OEE-Skript wird somit für diesen speziellen Fehlerbaum aus dem Produktivitätsmodell abgeleitet und als Quellcode in einem Datenspeicher abgelegt.

In Schritt 400 wird in der Datenverarbeitungseinrichtung 20 der Quellcode in ein ausführbares Programm übersetzt und in dem Datenspeicher abgelegt.

In Schritt 500 erfolgt der Zugriff auf das ausführbare Programm und die zyklische Ausführung, beispielsweise alle 2 Sekunden. Das Programm überprüft entsprechend der Bedingungen im Skript die Daten aus dem Leitsystem auf Fehlerereignisse. Wird ein Ereignis erkannt, dann werden die Fehlerdaten in die Fehlerdatenbank geschrieben.

Fig. 3 zeigt die konzeptuelle Darstellung des Produktivitätsmodells. Die zentralen Objekte für die automatische Ermittlung von Fehlerereignissen sind Fehlerereignis, Fehlerhypothese und Verifikation. Das Fehlerereignis stellt die oberste Ebene einer logischen Baumstruktur dar, wie beispielsweise der Papiermaschinenfehler, der in Fig. 5 dargestellt ist. Die Ebene darunter repräsentieren Hypothesen für Fehlerursachen. Jede Hypothese im Modell hat eine Assoziation zu einem 'Verifikations-Objekt'. Die Merkmale der Verifikation werden zur Generierung des OEE-Skriptes benutzt. Die wesentliche Merkmale, die herangezogen werden, sind Referenz, Datenquelle und Aktion. Die Aktion beinhaltet die Bedingung zur Verifikation und die Referenz das Prüfkriterium. Die Datenquelle gibt die Quelle der Daten an, die in der Bedingung überprüft werden. Die Objekte Anlagenteil und Auswirkung sind im Zusammenhang der Skript-Generierung von untergeordneter Bedeutung.

Fig. 4 zeigt ein OEE-Skript zum Verifizieren von Fehlerhypothesen einer Papiermaschine. Es handelt sich hierbei um die Fehlerhypothesen für einen Stillstand, Faserbruch und Kriechgeschwindigkeit. Wird ein Fehler erkannt, dann schreibt das Skript eine Status-Information in die Fehlerdatenbank.

Fig. 5 zeigt den Fehlerbaum für eine Papiermaschine. Das Fehlerereignis Papiermaschinenfehler hat die Hypothesen für Fehlerursachen Faserbruch, Stillstand und Kriechen.

## Patentansprüche

1. Verfahren zum automatisierten Ermitteln von Fehlerereignissen durch Auswertung von Felddaten einer Produktionsanlage im Rahmen eines Systems zur Ermittlung der Effektivität (Overall Equipment Effectiveness OEE) der Produktionsanlage und zur Fehlerursachenanalyse, wobei
a) die Ermittlung der Fehlerereignisse unter Einsatz einer Datenverarbeitungseinrichtung (20) und darin gespeicherter Programme zur Durchführung der Funktionen Fehlerereignis-Detektor (21) und OEE-Skript-Konfigurierer (22) erfolgt, wobei die Datenverarbeitungseinrichtung (20) eine Fehlerdatenbank (31) zur Speicherung ermittelter Fehlerereignisse und einen OEE-Skript-Speicher (32) enthält, und
b) die Ermittlung der Fehlerereignisse in nachstehenden Schritten erfolgt:
- der OEE-Skript-Konfigurierer (22) greift auf ein vorgegebenes Produktionsanlagentyp-spezifisches Produktivitätsmodell zu, generiert unter Berücksichtigung ebenfalls vorgegebener Konfigurationsdaten ein OEE-Skript und legt dieses im OEE-Skript-Speicher (32) ab, und
- der Fehlerereignis-Detektor (21) greift auf das OEE-Skript zu, ruft gemäß Ausführunganforderungen des OEE-Skripts Felddaten aus einem Datenserver (30) der Produktionsanlage ab, leitet gemäß Verarbeitungsanweisungen des OEE-Skripts aus den Felddaten Fehlerereignisse ab, und legt diese gegebenenfalls zusammen mit zuvor eingegebenen Fehlerereignissen in der Fehlerdatenbank (31) ab.

2. Verfahren nach Anspruch 1, **dadurch gekennzeichnet, daß** die Vorgabe des Produktionsanlagentyp-spezifischen Produktivitätsmodells **dadurch** erfolgt, daß ein WEB Browser (13) ein in einem WEB Server (41) gespeichertes Produktionsanlagentyp-spezifisches Produktivitätsmodell (40) abruft und dem OEE-Skript-Konfigurierer (22) zuführt.

3. Verfahren nach Anspruch 1 oder 2, **dadurch gekennzeichnet, daß** mittels einer Dateneingabe (11) zusätzliche Information zu Fehlerereignissen in die Datenverarbeitungseinrichtung (20) eingegeben wird, die vom Fehlerereignis-Detektor (21) bei der Ermittlung von Fehlerereignissen berücksichtigt wird.

## Claims

1. A method for the automatic determination of fault events by evaluating the field data of a production plant within the scope of a system for determining effectiveness (Overall Equipment Effectiveness OEE) of the production plant and for analyzing the cause of the fault, with
a) the determination of the fault event being performed by using a data processing device (20) and programs stored therein for performing the functions of fault event detector (21) and OEE script configurator (22), with the data processing device (20) comprising a fault database (31) for storing determined fault events and an OEE script memory (32), and
b) the determination of the fault events occurring in the following steps:
- the OEE script configurator (22) accesses a predetermined production-type-specific productivity model, generates an OEE script by taking into account also predetermined configuration data and stores the same in the OEE script memory (32), and
- the fault event detector (21) accesses the OEE script, retrieves field data from a data server (30) of the production plant according to the execution requirements of the OEE script, derives fault events from the field data according to processing instructions of the OEE script, and stores the same optionally together with previously entered fault events in the fault database (31).

2. A method according to claim 1, **characterized in that** the predetermination of the productivity model specific to the type of production plant occurs in such a way that a web browser (13) retrieves a productivity model (40) specific to the type of production plant as stored in a web server (41) and supplies the same to the OEE script configurator (22).

3. A method according to claim 1 or 2, **characterized in that** additional information in connection with the fault events is entered into the data processing device (20) by means of a data input means (11), which additional information is considered by the fault event detector (21) in the determination of fault events.

## Revendications

1. Procédé destiné à détecter automatiquement des défaillances par évaluation de données d'exploitation d'une unité de production dans le cadre d'un système destiné à constater l'efficacité (Overall Equipment Effectiveness OEE *- taux de rendement global TRG*) de l'unité de production et à analyser les causes de défaillances,
a) les défaillances étant détectées moyennant un dispositif de traitement de données (20) et des logiciels destinés à exécuter les fonctions de détecteur de défaillances (21) et d'outil de configuration du script OEE (22) qui y sont stockés, le dispositif de traitement de données (20) contenant une banque de données de défaillances (31) pour la mémorisation des défaillances détectées et une mémoire du script OEE (32), et
b) les défaillances étant détectées par les étapes suivantes :
- l'outil de configuration du script OEE (22) accède à un modèle de productivité imposé, spécifique au type de l'unité de production, génère un script OEE en tenant compte de données de configuration également imposées et le sauvegarde dans la mémoire du script OEE (32) et
- le détecteur de défaillances (21) accède au script OEE, récupère des données d'exploitation d'un serveur de données (30) de l'unité de production conformément aux demandes d'exécution du script OEE, déduit des données d'exploitation des défaillances conformément aux instructions de traitement du script OEE, et les sauvegarde, le cas échéant conjointement avec des défaillances saisies auparavant, dans la banque de données d'erreurs (31).

2. Procédé selon la revendication 1, **caractérisé en ce que** le modèle de productivité spécifique au type de l'unité de production est imposé par un navigateur web (13) qui récupère un modèle de productivité spécifique au type de l'unité de production (40) mis en mémoire dans un serveur web (41) et l'envoie à l'outil de configuration du script OEE (22).

3. Procédé selon la revendication 1 ou 2, **caractérisé en ce que** des informations supplémentaires concernant les défaillances sont entrées dans le dispositif de traitement de données (20) moyennant un dispositif de saisie de données (11), ces informations étant prises en compte par le détecteur de défaillances (21) lors de la détection de défaillances.
